# EUROPÄISCHE PATENTSCHRIFT

(11) **EP 3 936 730 B1**
(45) Veröffentlichungstag und Bekanntmachung des Hinweises auf die Patenterteilung: **31.01.2024**
(21) Anmeldenummer: 21184029.3
(22) Anmeldetag: 06.07.2021
(51) Int. Cl.: F16B 5/04, F16B 19/08, F16B 37/06

(54) **FUNKTIONSELEMENT**
FUNCTION ELEMENT
ÉLÉMENT FONCTIONNEL

(30) Priorität: 10.07.2020 DE 102020118262; 20.10.2020 DE 102020127590
(43) Veröffentlichungstag der Anmeldung: 12.01.2022
(73) Patentinhaber: Profil Verbindungstechnik GmbH & Co. KG, 61381 Friedrichsdorf (DE)
(72) Erfinder: Diehl, Oliver, 61250 Usingen (DE); Jene, Tobias, 61381 Friedrichsdorf (DE); Mahlme, Amer, 61352 Bad Homburg (DE); Sowa, Christian, 63165 Mühlheim/Main (DE); Humpert, Richard, 61231 Bad Nauheim (DE)
(74) Vertreter: Manitz Finsterwald Patent- und Rechtsanwaltspartnerschaft mbB

(56) Entgegenhaltungen:
- EP-B1- 1 740 344
- DE-A1-102018 114 982
- US-A- 5 056 207
- US-A- 5 617 652
- US-A1- 2017 335 876

## Beschreibung

Die vorliegende Erfindung betrifft ein selbststanzendes Funktionselement, das zum Einstanzen in ein Werkstück, insbesondere in ein Blechteil, ausgelegt ist. Das Element umfasst ein einen Flansch bildendes Kopfteil und einen sich von dem Kopfteil weg erstreckenden und insbesondere koaxial zu einer mittleren Längsachse des Funktionselements angeordneten Stanzabschnitt mit einer umlaufenden Stanzkante.

Auf dem Gebiet der Verbindungselemente bzw. Funktionselemente, die bei der Anfertigung von Werkstücken, wie etwa Blechteilen, an diesen maschinell angebracht werden, unterscheidet man zwischen Einpresselementen einerseits und Nietelementen andererseits. Einpresselemente zeichnen sich dadurch aus, dass sie bei Anbringung an ein Werkstück zumindest nicht absichtlich verformt werden, sondern das Werkstück wird verformt und in Eingriff mit Formmerkmalen des Einpresselementes gebracht, wodurch das Einpresselement auspresssicher am Blechteil befestigt wird. Bei Nietelementen wird das Element bei der Anbringung am Blechteil absichtlich verformt, meistens um ein Nietbördel auszubilden, wodurch das Blechteil zwischen dem Nietbördel und einem Flanschteil eingefangen wird, um auch hier eine auspresssichere Verbindung zu erreichen.

Sowohl Einpresselemente als auch Nietelemente kennt man ferner als selbststanzende Elemente. Die Bezeichnung selbststanzend ist so zu verstehen, dass das entsprechende Element in Zuge des Befestigungsprozesses sein eigenes Loch in das Werkstück stanzt. Die dafür erforderliche Kraft wird beispielsweise von einer Presse, von einem Roboter oder einer kraftbetätigten Zange erzeugt. Dabei wird das selbststanzende Element gegen das Werkstück gepresst, während dieses auf der dem Element abgewandten Seite auf eine entsprechende Matrize abgestützt wird. Selbststanzende Elemente sind mit Kostenvorteilen verbunden, da das Werkstück nicht vorgelocht werden muss.

Funktionselemente der vorstehend beschriebenen Art finden unter anderem - aber bei weitem nicht nur - im Automobilbau Anwendung. Mit der Ausweitung der Einsatzgebiete selbststanzender Funktionselemente steigen auch die Anforderungen an die Sicherheit des entsprechenden Prozesses, mittels dem die Elemente an einem Werkstück befestigt werden. Problematisch ist unter anderem der Verbleib des bei dem Befestigungsprozess ausgestanzten Butzens. Wird dieser nicht zuverlässig abgeführt, so kann er das Befestigungswerkzeug und/oder das Werkstück beschädigen. Für eine zuverlässige Butzenabfuhr zu sorgen, ist in manchen Anwendungsfällen aufwändig und daher kostentreibend.

Bei manchen Elementen herkömmlicher Art verbleibt der Butzen in dem Stanzabschnitt. Bei dem Ausstanzen des Butzens verspreizt er sich darin. Es ist jedoch nicht auszuschließen, dass er sich bei starken Belastungen oder Vibrationen löst. Ein Befestigungselement, bei welchem ein Butzen mittels einer Verzahnung innerhalb eines Halteabschnitts gehalten werden soll, ist aus dem Dokument US 2017/335876 A1 bekannt. Die DE 10 2018 114982 A1 offenbart ein Element mit den Merkmalen des Oberbegriffs des Anspruchs 1.

Es besteht daher ein Bedarf nach selbststanzenden Funktionselementen, die sich auf einfache Weise zuverlässig an einem Werkstück befestigen lassen und mit denen die vorstehend beschriebenen Nachteile vermieden werden.

Mit der vorliegenden Erfindung wird ein selbststanzendes Funktionselement gemäß Anspruch 1 bereitgestellt, das diesen Bedarf befriedigt. Erfindungsgemäß ist vorgesehen, dass das Funktionselement ein einen Flansch bildendes Kopfteil mit einer Anlagefläche zur Anlage an dem Werkstück und einen sich von dem Kopfteil, insbesondere von der Anlagefläche, weg erstreckenden Stanzabschnitt umfasst, der insbesondere koaxial zu einer mittleren Längsachse des Funktionselements angeordnet ist. Der Stanzabschnitt weist an seinem freien Ende eine umlaufende Stanzkante zum Durchstanzen des Werkstücks auf. Er umgibt einen Hohlraum in Umfangsrichtung, der eine durch die Stanzkante definierte Öffnung aufweist. Ferner weist eine dem Hohlraum zugewandte Innenwand des Stanzabschnitts zumindest eine nach radial innen in den Hohlraum ragende Butzensicherungserhebung auf. Die Erhebung weist die Form einer in axialer Richtung verlaufenden Rippe auf.

Mit der Butzensicherungserhebung wird eine Möglichkeit bereitgestellt, einen aus dem Werkstück herausgestanzten Butzen in dem Element - genauer in dem von dem Stanzabschnitt zumindest abschnittsweise definierten Hohlraum - auf einfache Weise zuverlässig zu sichern.

Das Element kann aus Metall sein und beispielsweise durch einen herkömmlichen Kaltschlagprozess hergestellt werden. Die Butzensicherungserhebung kann dabei gleich mit ausgeformt werden. Grundsätzlich kann das Element aber auch (teilweise oder ganz) aus einem anderen Werkstoff gefertigt sein, beispielsweise aus einem Kunststoff.

Das Element ist zur Verwendung mit den verschiedensten Werkstücken geeignet. Bevorzugt wird es an einem Blechteil aus Metall eingesetzt. Aber auch faserverstärkte Kunststoff oder Verbundwerkstoff können mit einem erfindungsgemäßen Element versehen werden.

Weitere Ausführungsformen der Erfindung sind in der Beschreibung, den Ansprüchen und den beigefügten Zeichnungen angegeben.

Gemäß einer Ausführungsform des selbststanzenden Funktionselements ist der Stanzabschnitt als ein zur Herstellung eines Formschlusses mit dem Werkstück umformbarer Nietabschnitt ausgestaltet. Grundsätzlich kann die vorliegende Erfindung jedoch auch bei einem Einpresselement realisiert sein.

Die Anlagefläche kann in einer axialen Stirnansicht den Stanzabschnitt in Umfangsrichtung umgeben, insbesondere wobei die Anlagefläche ringförmig ausgestaltet ist. Auch der Stanzabschnitt und/oder das Kopfteil können ringförmig ausgestaltet sein. Von einer Rotationssymmetrie abweichende Grundformen der Anlagefläche, des Stanzabschnitts und/oder des Kopfteils sind ebenfalls denkbar, beispielsweise ovale oder polygonale Grundformen.

Um die Verbindung zwischen dem Werkstück und dem Funktionselement besonders zuverlässig zu gestalten, - insbesondere wenn dieses zwei zu verbindende Lagen umfasst - können die Anlagefläche und ein Außenwandabschnitt des Stanzabschnitts, der parallel zu der Längsachse angeordnet ist, über einen Übergangsabschnitt miteinander in Verbindung stehen. Der Übergangsabschnitt ist zumindest abschnittsweise gekrümmt und/oder schräg zu der Längsachse ausgebildet und angeordnet.

Diese Ausgestaltung ist insbesondere bei einem Werkstück oder einer Werkstücckombination von Vorteil, das/die zwei oder mehr Lagen umfasst, und vor allem bei dem/der unterschiedliche Materialien zum Einsatz gelangen, beispielsweise bei einem zweilagigen Werkstück, bei dem die dem Element zugewandte Komponente ein Stahlblechteil ist und die dem Element abgewandte Komponente ein Aluminiumblechteil ist. Durch das Stanzen und das nachfolgende Tiefziehen der Blechwerkstoffe wird das untere Blechteil zwischen dem oberen Blechteil und einem Einlaufradius der vergleichsweise harten Matrize geklemmt. Der Einlaufradius ist die Krümmung der Matrizenform an ihrem Übergang/Kante zu einer Auflagefläche für das Werkstück.

Es wurde erkannt, dass das untere Blechteil an dem Einlaufradius der Matrize (zu) stark gequetscht wird, wenn der Einlaufradius der Matrize (zu) klein ist. Daher sollte der Einlaufradius der Matrize groß genug ausgelegt werden, wobei die Eigenschaften der beteiligten Komponenten zu berücksichtigen sind. Um zu vermeiden, dass Hohlräume zwischen den Lagen des Werkstücks und/oder zwischen den Lagen und dem Element entstehen, kann der Übergangsabschnitt des Elements, das erfindungsgemäß als ein Stanz- und Tiefziehwerkzeug fungiert, eine Krümmung und/oder eine Schräge aufweisen. Der Übergangsabschnitt kann eine zu dem Einlaufradius der Matrize komplementäre Form aufweisen. Es ist jedoch nicht zwingend erforderlich, dass der Übergangsradius und der Einlaufradius gleiche Krümmungsradien aufweisen.

Gemäß einer Ausführungsform sind die Anlagefläche, der Übergangsabschnitt und/oder der Außenwandabschnitt mit zumindest einem Verdrehsicherungsmerkmal versehen, insbesondere wobei das Verdrehsicherungsmerkmal eine Erhebung oder eine Vertiefung ist. Beispielsweise ist das zumindest eine Verdrehsicherungsmerkmal eine sich in axialer oder radialer Richtung erstreckende Rippe oder Nut. In einem befestigten Zustand des Elements wirkt das Verdrehsicherungsmerkmal über einen Formschluss mit dem Werkstück zusammen, so dass das Element größeren Drehmomenten widerstehen kann. Verschiedene Verdrehsicherungsmerkmale können beliebig miteinander kombiniert werden, um die im konkreten Anwendungsfall erforderliche Sicherung gegen ein Verdrehen des Elements durch an diesem angreifende Drehmomente zu erzielen.

Erfindungsgemäß ist die Butzensicherungserhebung in einem axialen Endbereich des Hohlraums angeordnet, der der Öffnung des Hohlraums abgewandt ist. Der Endbereich umfasst weniger als 50%, bevorzugt weniger als 40% einer axialen Erstreckung des Hohlraums. Insbesondere ist zumindest ein Abschnitt der Butzensicherungserhebung weiter von einem Endabschnitt entfernt, der den Hohlraum in axialer Richtung an einer der Öffnung abgewandten Seite begrenzt, als eine Dicke des zu durchstanzenden Werkstücks. Im Bereich der Öffnung des Hohlraums und in sich daran anschließenden Bereichen ist die Innenwand des Stanzabschnitts bevorzugt frei von Erhebungen, um den Stanzprozess zu optimieren.

Es kann vorgesehen sein, dass der Endabschnitt eine gestufte Vertiefung aufweist.

Das Funktionselement kann ein Bolzenelement sein, das einen Bolzenabschnitt aufweist, der sich auf der dem Stanzabschnitt abgewandten Seite von dem Kopfteil erstreckt. Insbesondere ist der Bolzenabschnitt zumindest abschnittweise mit einem Außengewinde versehen. Derartige Bolzenelemente dienen in einem an einem Werkstück fixierten Zustand beispielsweise als Befestigungspunkte, mit deren Hilfe Objekte an dem Werkstück befestigt werden können. Das Bolzenelement kann beispielsweise ein Zentrierbolzen, ein Massebolzen, ein Kugelbolzen o.ä. sein.

Das Funktionselement kann ein Mutterelement sein. Das Mutterelement kann eine Durchgangsöffnung aufweisen, insbesondere welche sich durch den Stanzabschnitt und durch den Kopfteil des Funktionselements erstreckt. Insbesondere ist die Durchgangsöffnung zumindest abschnittsweise mit einem Innengewinde versehen. Beispielsweise kann vorgesehen sein, dass das Innengewinde in dem Kopfteil oder einem Abschnitt des Kopfteils angeordnet ist, während der Stanzabschnitt kein Innengewinde aufweist. Der Durchmesser der Durchgangsöffnung kann variieren, und beispielsweise in dem Stanzabschnitt, dem Kopfabschnitt und/oder im Bereich des Innengewindes verschiedene Werte annehmen. Es ist aber auch denkbar, dass das Element eine Sacklochmutter ist. Dieses Element weist keine durchgehende Öffnung auf, sondern ist mit einem Sackloch versehen, das bevorzugt ein Innengewinde aufweist.

Derartige Mutterelemente können in einem an einem Werkstück fixierten Zustand als Befestigungspunkte zur Befestigung von Objekten an dem Werkstück dienen, wobei Objekte beispielsweise mittels eines Fixierelements, etwa mittels einer Schraube oder eines Gewindebolzens, an dem Mutterelement befestigbar sein können.

Die vorliegende Erfindung betrifft fernen ein Zusammenbauteil umfassend ein Funktionselement nach einer der vorstehend beschriebenen Ausführungsformen und ein Werkstück, insbesondere zumindest ein Blechteil, wobei ein durch den Stanzabschnitt ausgestanzter Butzen in dem Hohlraum angeordnet ist, der von der Butzensicherungserhebung reibschlüssig und/oder formschlüssig in dem Hohlraum gehalten ist.

Gemäß einer Ausführungsform des Zusammenbauteils kann der Butzen von einem umgeformten Abschnitt der Butzensicherungserhebung formschlüssig in dem Hohlraum gehalten sein. Insbesondere erfolgt die Umformung des genannten Abschnitts bei der Herstellung des Zusammenbauteils, also bei der Befestigung des Elements an dem Werkstück. Der umgeformte Abschnitt der Erhebung sichert den Butzen (evtl. zusätzlich zu einem Reibschluss) zuverlässig in dem Hohlraum, so dass die eingangs beschriebenen Probleme vermieden werden. Insbesondere hintergreift der umgeformte Abschnitt den Butzen an einer dem Kopfteil abgewandten Seite.

Der Butzen kann in einem der Butzensicherungserhebung benachbarten Bereich umgeformt sein, insbesondere in radialer Richtung. Beispielsweise weist er eine Kerbe auf, die bei dem Heraustrennen des Butzens durch eine rippenartige Butzensicherungserhebung erzeugt wird. Dies trägt zu einer Verbesserung eines Reibschlusses zwischen dem Element und dem Butzen bei.

Um potentiell störende Konturen zu vermeiden, kann vorgesehen sein, dass der Butzen und der umgeformte Abschnitt der Butzensicherungserhebung an einer dem Kopfteil abgewandten Seite bündig miteinander abschließen. Falls eine Umformung der Butzensicherungserhebung vorgesehen ist, kann Material der Erhebung dabei abschnittsweise in axialer Richtung in das Material des Butzens gepresst werden, so dass dieses den Butzen zwar hintergreift, aber dennoch in axialer Richtung nicht nennenswert über diesen hinaussteht.

Das Funktionselement des Zusammenbauteils kann einen Stanzabschnitt aufweisen, der als Nietabschnitt ausgebildet ist, wobei ein Abschnitt des Nietabschnitts derart umgeformt ist, dass er das Werkstück an einer dem Kopfteil abgewandten Seite hintergreift. Dadurch ist die Verbindung des Funktionselements und des Werkstücks besonders zuverlässig. Es ist aber auch denkbar, dass das Zusammenbauteil ein Einpresselement und ein Werkstück umfasst, insbesondere wobei das Werkstück umgeformt ist, um eine formschlüssige Verbindung mit dem Element zu schaffen.

Das Werkstück des Zusammenbauteils kann zumindest zwei Komponenten umfassen, die von dem Stanzabschnitt durchstanzt sind, wodurch diese miteinander verbunden werden. Beispielsweise ist das Werksstück zwei- oder mehrlagig und/oder umfasst im Bereich der Verbindung der Komponenten unterschiedliche Materialien.

Ein weiterer Aspekt der vorliegenden Erfindung betrifft ein Verfahren zur Befestigung eines selbststanzenden Funktionselements gemäß zumindest einer der vorstehend beschriebenen Ausführungsformen an einem Werkstück mit den Schritten:
- Bereitstellung des Werkstücks und des Funktionselements,
- Durchstanzen des Werkstücks mittels des Stanzabschnitts des Funktionselements und Heraustrennen eines Stanzbutzens derart, dass sich dieser in dem Hohlraum des Funktionselements befindet,
wobei der Butzen derart in Eingriff mit der Butzensicherungserhebung gebracht wird, dass der Butzen von der Butzensicherungserhebung reibschlüssig und/oder formschlüssig in dem Hohlraum gehalten ist.

Insbesondere wird der Butzen erst nach dem Durchstanzen des Werkstücks in Eingriff mit der Butzensicherungserhebung gebracht, so dass die bei dem Ineingriffbringen auftretenden Kräfte nicht dem Durchstanzen entgegenwirken, wodurch die aufzubringenden Prozesskräfte minimiert werden.

Gemäß einer Ausführungsform des Verfahrens wird die Butzensicherungserhebung zumindest abschnittsweise derart umgeformt, dass der Butzen durch einen umgeformten Abschnitt der Butzensicherungserhebung formschlüssig in dem Hohlraum gehalten ist, insbesondere derart, dass der umgeformte Abschnitt den Butzen an einer dem Kopfteil abgewandten Seite hintergreift.

Insbesondere wird mit diesem Verfahren ein Zusammenbauteil gemäß einer der vorstehend beschriebenen Ausführungsformen geschaffen.

Gemäß einer weiteren Ausführungsform des Verfahrens stützt sich das Werkstück bei der Befestigung des Funktionselements auf einer Matrize ab, die einen Matrizenstempel aufweist, der in den Hohlraum des Funktionselements eingeführt wird und durch den die Butzensicherungserhebung nach dem Durchstanzen zumindest abschnittsweise umformt wird, insbesondere wobei das abschnittsweise Umformen ein zumindest teilweises Abschaben der Butzensicherungserhebung von der Innenwand des Stanzabschnitts umfasst.

Ein Ausführungsform des Verfahrens sieht vor, dass der Stanzabschnitt des Funktionselements als Nietabschnitt ausgebildet ist, der durch die Matrize derart umgeformt wird, dass er das Werkstück an einer dem Kopfteil abgewandten Seite hintergreift.

Nachfolgend wir die vorliegende Erfindung rein bespielhaft anhand vorteilhafter Ausführungsformen unter Bezugnahme auf die beigefügten Zeichnungen erläutert. Diese zeigen:
- Fig. 1: eine Ausführungsform des erfindungsgemäßen Funktionselements,
- Fig. 2: eine Stirnansicht des Elements gemäß Fig. 1,
- Fig. 3: eine Schnittansicht des Elements gemäß Fig. 1,
- Fig. 4: eine Teilschnittansicht der bei einer Befestigung des Elements gemäß Fig. 1 an einem Werkstück beteiligten Komponenten zu Beginn des Befestigungsprozesses,
- Fig. 5: eine Schnittansicht der Komponenten gemäß Fig. 4 nach Abschluss der Befestigungsbewegung der beteiligten Komponenten,
- Fig. 5A: eine Vergrößerung eines Details der Fig. 5,
- Fig. 6: eine Stirnansicht des erhaltenen Zusammenbauteils,
- Fig. 7: eine Schnittansicht des Zusammenbauteils gemäß Fig. 6 und
- Fig. 7A: eine Vergrößerung eines Details der Fig. 7;
- Fig. 8A: eine perspektivische Darstellung eines als Mutterelements ausgebildeten Funktionselements mit einer Verdrehsicherung und einem Fixierelement;
- Fig. 8B: eine um 180° gedrehte perspektivische Darstellung des Funktionselements gemäß Fig. 8A;
- Fig. 8C: eine Draufsicht auf eine Anlagefläche des Mutterelements gemäß Fig. 8A;
- Fig. 8D: eine Querschnittsansicht des Mutterelements und des Fixierelements gemäß Fig. 8A in einem zusammengesetzten Zustand;
- Fig. 8E: eine Querschnittsansicht eines Zusammenbauteils umfassend ein Werkstück und die zusammengesetzte Funktionseinheit gemäß Fig. 8D.

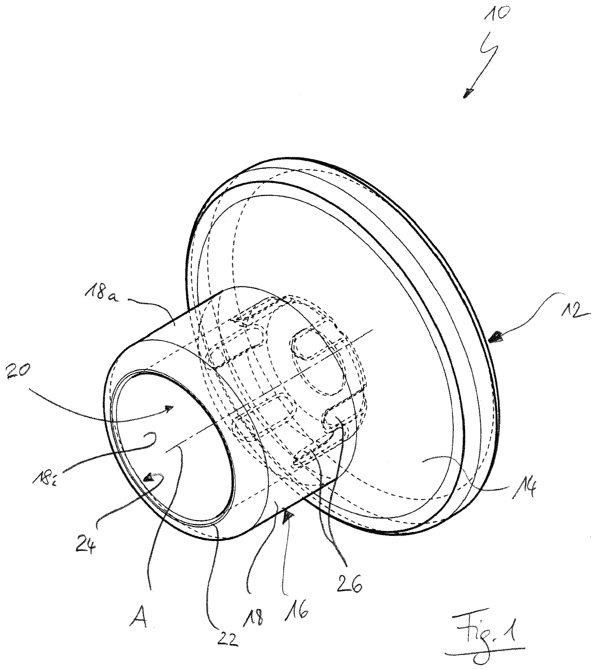

Fig. 1 zeigt ein selbststanzendes Element 10 mit einem Kopfteil 12, dass zum Einbringen in ein Werkstück ausgelegt ist. In der Regel ist das Werkstück ein Blechteil, insbesondere ein metallisches Blechteil. Grundsätzlich ist es jedoch auch möglich, das Element 10 beispielsweise in ein Werkstück aus einem Verbundwerkstoff oder an einem faserverstärktes Kunststoffbauteil einzubringen. Die Form des Werkstücks ist frei wählbar. Das Element ist bevorzugt aus Metall, kann jedoch vollständig oder teilweise aus einem anderen Material gebildet sein, beispielsweise aus einem Kunststoff.

Wie nachfolgend gezeigt wird, dient das Element 10 im vorliegenden Beispiel zur Verbindung zweier Lagen eines Werkstücks. Es ist jedoch auch denkbar, dass der Kopfteil 12 mit Funktionskomponenten versehen ist, die beispielsweise zu Befestigungszwecken dienen. Insbesondere ist der Kopfteil 12 mit einem Bolzenabschnitt versehen, der sich von einer einer Anlagefläche 14 abgewandten Seite des Kopfteils 12 erstreckt. Der Bolzenabschnitt kann ein Außengewinde aufweisen. Der Kopfteil 12 kann alternativ auch mit einer Komponente einer Rastverbindung o. ä. versehen sein. Grundsätzlich kann der Grundgedanke der Erfindung bei jedem selbststanzenden Funktionselement zum Einsatz gelangen.

Von dem Kopfteil 12 bzw. der Anlagefläche 14 erstreckt sich ein Stanzabschnitt 16, der durch eine ringförmige Wandung 18 gebildet ist, die in Umfangsrichtung geschlossen ist. Die Wandung 18 definiert zumindest abschnittsweise einen Hohlraum 20. Der im Wesentlichen kreisförmige Kopfteil 12, die ringförmige Anlagefläche 14 und der Stanzabschnitt 16 sind koaxial zu einer Längsachse A des Elements 10 angeordnet. Abweichend von der gezeigten Ausführung können die genannten Komponenten auch nicht-rotationssymmetrisch ausgebildet sein, beispielsweise oval oder polygonal.

Der Stanzabschnitt 16 dient zum Durchstanzen des nicht-vorgelochten Werkstücks. Er bildet somit das zur Befestigung des Elements 10 erforderliche Loch selbst, wobei ein Butzen aus dem Werkstück herausgetrennt wird. Um den Stanzprozess zu optimieren, weist der Abschnitt 16 an seinem, dem Kopfteil 12 abgewandten freien Ende eine Stanzkante 22 auf, die wiederum eine Öffnung 24 des Hohlraums 10 definiert. Die Stanzkante 22 geht über - in axialer Richtung gesehen - gekrümmte und/oder geneigte Flächen in eine Außenwand 18a bzw. eine Innenwand 18i der Wandung 18 über.

Die gestrichelten Linien in Fig. 1 deuten Aspekte des Elements 10 an, die in der Perspektivansicht eigentlich nicht zu sehen wären. So ist zu erkennen, dass an der Innenwand 18i in Umfangsrichtung gleichmäßig verteilte axiale Rippen 26 angeordnet sind, die sich von dieser erheben und in radialer Richtung in den Hohlraum 20 ragen.

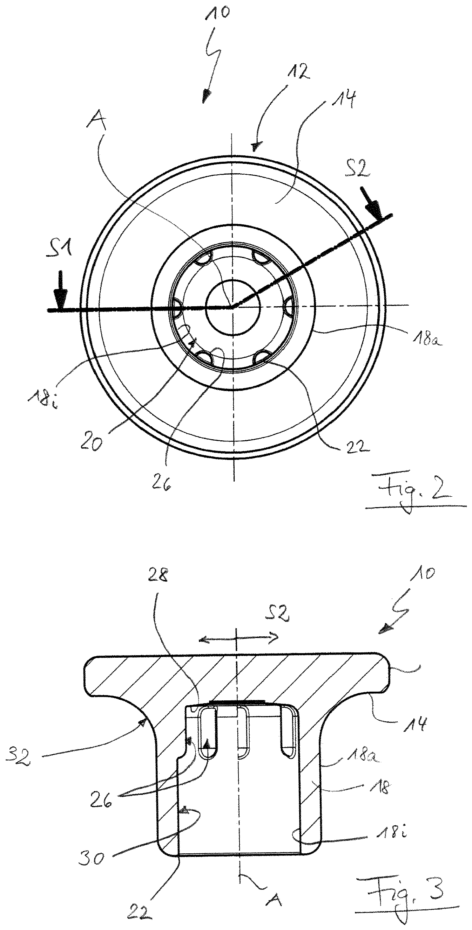

Fig. 2 zeigt das Element 10 in einer axialen Ansicht, wodurch die Rippen 26 an der Innenwand 18i erkennbar sind. Außerdem sind Schnittebenen S1, S2 angegeben. Die entsprechenden Schnittansichten sind in Fig. 3 gezeigt.

Die linke Seite der Fig. 3 zeigt einen Schnitt durch das Element 10 in der Ebene S1, die derart angeordnet ist, dass eine axiale Rippe 26 geschnitten wird. Dadurch ist zu erkennen, dass sich die Rippe 26 in axialer Richtung von einem Bodenabschnitt 28, der den Hohlraum 20 kopfteilseitig in axialer Richtung begrenzt, bis etwa zu 33% der axialen Erstreckung des Hohlraums 20 erstreckt. Das freie Ende der Rippe 26 ist abgerundet oder abgeschrägt ausgeführt, um leichter in den herauszustanzenden Butzen eindringen zu können. Die axiale und radiale Erstreckung der Rippen 26 kann grundsätzlich frei gewählt werden. Wie aus den nachfolgenden Erläuterungen noch ersichtlich werden wird, ist ihre axiale Erstreckung aber zumindest geringfügig größer als die Dicke des Butzens bzw. die Dicke des Werkstücks im Befestigungsbereich.

Um den Stanzprozess zu vereinfachen, ist ein von der Stanzkante 22 ausgehender Bereich der Innenwand 18i frei von Rippen 26 oder anderen Erhebungen. Bevorzugt umfasst dieser erhebungsfreie Bereich mehr als 20%, mehr als 30%, mehr als 50% oder mehr als 60% der axialen Erstreckung des Hohlraums 20. Insbesondere ist die axiale Erstreckung des erhebungsfreien Bereichs 30 zumindest geringfügig größer als die Dicke des Butzens bzw. des Werkstücks, so dass das Heraustrennen des Butzens nicht durch Erhebungen behindert wird. Bevorzugt beträgt die axiale Erstreckung des erhebungsfreien Bereichs 30 mehr als 120% der Dicke des Butzens bzw. des Werkstücks.

Die rechte Seite der Fig. 3 zeigt einen Schnitt, der nicht durch eine Rippe 26 geht. Beiden Schnitten ist aber zu entnehmen, dass die Außenwand 18a nicht direkt in die Anlagefläche 14 übergeht. Zwischen ihnen ist ein Übergangsabschnitt 32 vorgesehen, der im vorliegenden Beispiel gekrümmt ausgestaltet ist, wobei der Krümmungsradius im Wesentlichen konstant ist. Zudem ändert sich die Geometrie des Übergangsabschnitts 32 in Umfangsrichtung nicht. Es ist jedoch durchaus vorstellbar, dass der Übergangsabschnitt 32 - alternativ oder zusätzlich -zumindest abschnittsweise schräg zur Längsachse A ausgestaltet ist und/oder seine Geometrie in Umfangsrichtung und/oder in axialer Richtung variiert. Die Geometrie des Umfangsabschnitts 32 kann ganz an die jeweils vorliegenden Anforderungen angepasst werden. Eine Variation in Umfangsrichtung kann beispielsweise zu einer Verbesserung der Verdrehsicherung des Elements 10 führen.

Ganz grundsätzlich, d. h. unabhängig von anderen Aspekten der jeweiligen Ausführungsform, können die Anlagefläche 14 und/oder die Außenwand 18a mit Erhebungen und/oder Vertiefungen (z. B. Rippen oder Nuten) versehen sein, die als Verdrehsicherungsmerkmale wirken. Beispielsweise kann die Außenwand 18a in axialer Richtung verlaufende Rippen aufweisen. Zusätzlich oder alternativ kann die Anlagefläche 14 mit radialen Rippen versehen sein.

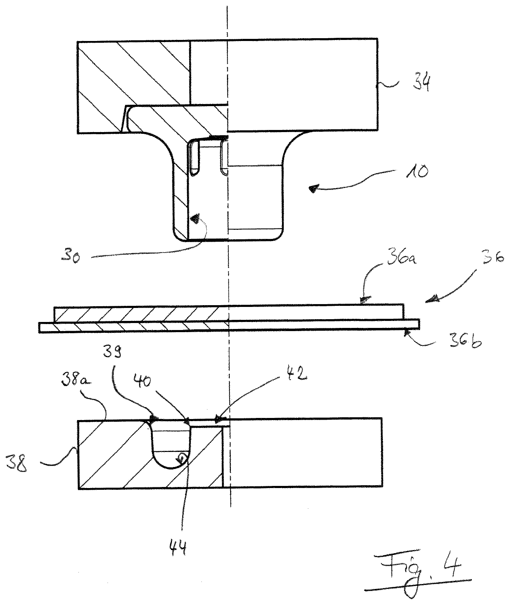

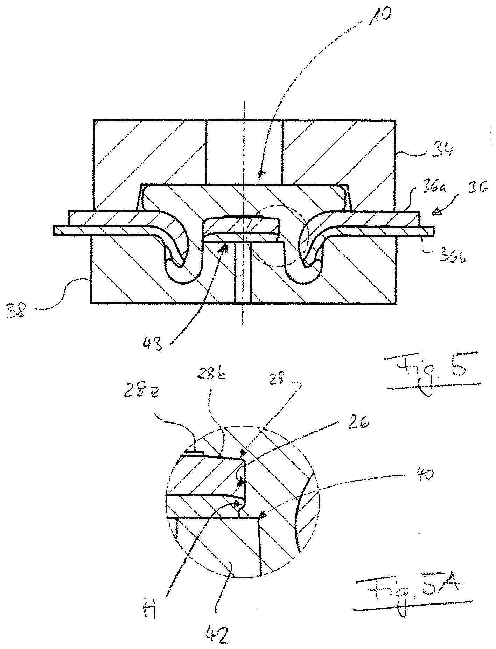

Fig. 4 zeigt das Element 10, wie es in einem Setzkopf 34 einer Setzeinrichtung angeordnet ist. Mittels des Setzkopfes 34 soll das Element 10 in ein nicht-vorgelochtes Werkstück 36 eingebracht werden, das im vorliegenden Ausführungsbeispiel zwei Lagen 36a und 36b aufweist. Die Setzeinrichtung umfasst ferner eine Matrize 38, die auf der dem Setzkopf 34 gegenüberliegenden Seite des Werkstücks 36 angeordnet ist. Während des Befestigungsprozesses stützt sich das Werkstück 36 auf einer Auflagefläche 38a der Matrize 38 ab und der Setzkopf 34 drückt das Element 10 gegen das Werkstück 36. Dabei wirken eine Trennkante 40 eines Matrizenstempels 42 der Matrize 38 und die Stanzkante 22 des Elements 10 zusammen und trennen einen Butzen 43 (siehe Fig. 5) aus dem Werkstück 36 heraus.

Der Außenradius des Stempels 42 ist geringfügig kleiner als der Innendurchmesser des erhebungsfreien Bereichs 30, sodass der Stempel 42 in den Hohlraum 20 eindringen kann, wobei der herausgetrennte Butzen 43 in dessen Inneres geschoben wird.

Nach dem Heraustrennen des Butzens 43 wird die Wandung 18 bei einer Fortsetzung der Bewegung des Setzkopfes 34 durch einen U-förmig gekrümmten Abschnitt 44 der Matrize 38 nach radial außen umgebogen. Durch diese Umformung hintergreift der umgeformte Abschnitt des Stanzabschnitts 16 das Werkstück 36. Der Stanzabschnitt 16 hat somit auch die Funktion eines Nietabschnitts, weshalb das Element 10 auch als selbststanzendes Nietelement bezeichnet werden kann.

Bei dem Durchstanzen des Werkstücks 36 wird die untere Werkstücklage 36b zwischen der oberen Werkstücklage 36a und einem Einlaufradius 39 der Matrize 38 geklemmt. Wenn der Radius 39 zu klein ist, wird die Lage 36b bei dem Stanzprozess übermäßig beansprucht. Er ist daher unter Berücksichtigung der Eigenschaften der Lagen 36a, 36b geeignet anzupassen.

Der vorstehend beschriebene Zustand ist in Fig. 5 gezeigt. Die Anlagefläche 14 liegt an der Lage 36a an. Zu erkennen ist ferner, dass durch die Ausgestaltung des Übergangsabschnitts 32 eine gute Anlage der nach unten umgebogenen Lochrandabschnitte des Werkstücks 36 an dem Element 10 erreicht wurde. Der Übergangsabschnitt 32 weist dabei einen etwas größeren Krümmungsradius auf als der Einlaufradius 39, um den geometrischen Verhältnissen und den Eigenschaften (z.B. Materialeigenschaften, Dicke) der Lagen 36a, 36b Rechnung zu tragen.

Bei dem Einbringen des Elements 10 wird - wie vorstehend beschrieben - der Butzen 43 in den Hohlraum geschoben. Sobald der Butzen 43 in den Bereich des Hohlraums 20 gelangt, der mit den axialen Rippen 26 versehen ist, graben sich diese in die Außenseite des Butzens 43. Da die axialen Rippen 26 in axialer Richtung länger sind als die Dicke des Butzens 43, treten die freien Enden der Rippen 26 zu einem bestimmten Zeitpunkt aus der dem Matrizenstempel 42 zugewandten Seite des Butzens 43 aus.

Sie geraten dann in Kontakt mit dem Stempel 42, dessen Außenradius nur geringfügig kleiner als der Innenradius des Hohlraums 20 ist. Folglich werden die Rippen 26 durch die Wirkung des Stempels 42 von der Innenwand 18i abgeschabt und in die Lage 36b des Werkstücks 36 gepresst, wie auch der Fig. 5A gut zu entnehmen ist, die eine Vergrößerung des mit einem gestrichelten Kreis markierten Teils der Fig. 5 ist. Dabei entsteht ein Hinterschnitt H, der den Butzen 43 zuverlässig in dem Hohlraum 20 sichert.

Dieser Prozess dauert an, bis die Setzeinrichtung geschlossen ist. Bei einer geeigneten Ausgestaltung des Stempels 42 schlägt dann der Butzen an dem Bodenabschnitt 28 an. Im vorliegenden Beispiel umfasst der Bodenabschnitt 28 einen leicht konisch ausgebildeten Abschnitt 28k und eine zentrale zylindrische Vertiefung 28z.

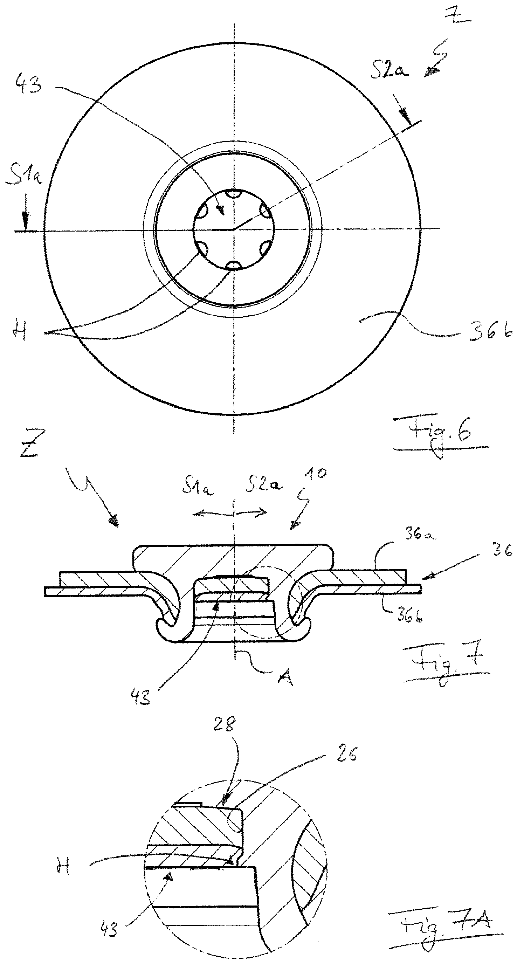

Das erhaltene Zusammenbauteil Z ist in den Fig. 6, 7 und 7A (Teilvergrößerung der Fig. 7) gezeigt. Fig. 6 zeigt eine axiale Ansicht von unten, sodass die in die Lage 36b des Butzens 43 gedrückten Hinterschnitte H zu erkennen sind, die durch die abgeschabten Abschnitte der Rippen 26 gebildet wurden. Fig. 7 zeigt Schnitte durch das Zusammenbauteil Z entlang der Schnittebenen S1a, S2a (siehe Fig. 6).

Abweichend von der vorstehend beispielhaft beschriebenen Ausführungsform der Erfindung kann auch auf ein Umformen der axialen Rippen 26 verzichtet werden. Der Butzen 43 wird dann nur reibschlüssig in dem Hohlraum gehalten. Der Reibschluss zwischen der Innenwand 18i und der radialen Außenseite des Butzens 43 wird durch das Zusammenwirken der Rippen 26 mit dem Butzen 43 verstärkt.

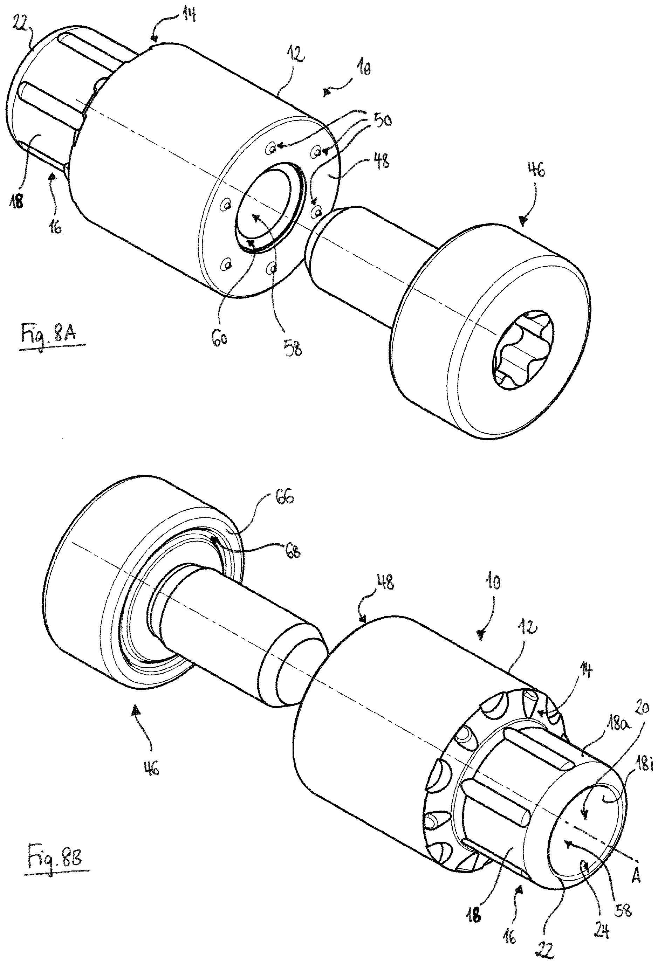

Fig. 8A bis 8E zeigen ein als Mutterelement ausgebildetes Funktionselement 10 zur selbststanzenden Anbringung an einem Werkstück 36 wie vorstehend bereits beschrieben. Das Mutterelement kann dazu dienen, ein weiteres Objekt an dem Werkstück 36 zu befestigen, beispielsweise indem das Objekt, beispielsweise ein Kabelschuh, zwischen dem Mutterelement und einem Fixierelement 46 eingeklemmt wird. Zu diesem Zweck weist das Mutterelement eine sich in radialer Richtung erstreckende, ringförmige Klemmfläche 48 auf, welche an dem Kopfteil 12 auf einer dem Stanzabschnitt 16 abgewandten Seite angeordnet ist. Das Fixierelement 46 ist im gezeigten Ausführungsbeispiel mittels einer Drehbewegung an dem Mutterelement fixierbar. Es kann, wie in Fig. 8A bis 8E gezeigt ist, als Fixierschraube ausgebildet sein.

Um eine verdrehsichere Befestigung des zu befestigenden Objekts zu gewährleisten, weist die Klemmfläche 48 spikeförmige Erhebungen 50 auf (Fig. 8A), welche sich beim Befestigen des Fixierelements 46 an dem Mutterelement in das Objekt eingraben und somit ein Verdrehen des Objekts relativ zu dem Mutterelement verhindern. Selbstverständlich sind derartige spikeartige Erhebungen 50 optional und es kann in vergleichbarer Weise ein Mutterelement ohne solche Erhebungen 50, mit Erhebungen 50 in abgewandelter Form und/oder ohne Klemmfläche 48 verwendet werden.

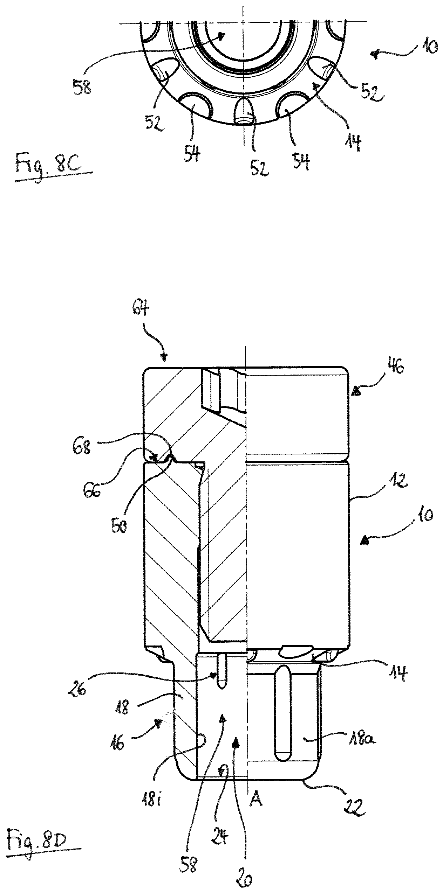

Um das Mutterelement selbst verdrehsicher an dem Werkstück 36 zu befestigen, weist die an dem Kopfteil 12 ausgebildete Anlagefläche 14 mehrere als Verdrehsicherungsmerkmale dienende Erhebungen 52 und Vertiefungen 54 auf (Fig. 8C), die sich in das Material des Werkstücks 36 eingraben oder in die bei der Befestigung des Funktionselements 10 Material des Werkstücks 36 einfließt. Zusätzlich weist der Stanzabschnitt 16 auf der Außenwand 18a der Wandung 18 in Umfangsrichtung verteilte, sich in axialer Richtung erstreckende Verdrehsicherungsrippen 56 auf, welche ebenfalls ein Verdrehen des Funktionselements 10 bezüglich des Werkstücks 36 verhindern. Selbstverständlich können je nach Anwendung und abhängig von den für das Werkstücks und/oder das Funktionselement verwendeten Materialien die beschriebenen Verdrehsicherungselemente 52, 54, 56 unabhängig voneinander oder beliebig miteinander kombiniert vorliegen, wobei Abwandlungen der Verdrehsicherungselemente 52, 54, 56 möglich sind.

Das Mutterelement weist in dem Stanzabschnitt 16 einen Hohlraum 20 auf, wie er bereits im Zusammenhang mit Fig. 1 bis 7 beschrieben wurde. Im Fall des Mutterelements setzt sich der Hohlraum 20 jedoch gewissermaßen in bzw. durch den Kopfabschnitt 12 fort, sodass das Mutterelement letztlich eine axiale Durchgangsöffnung 58 aufweist, die sich von der Klemmfläche 48 bis zu der Stanzkante 22 erstreckt.

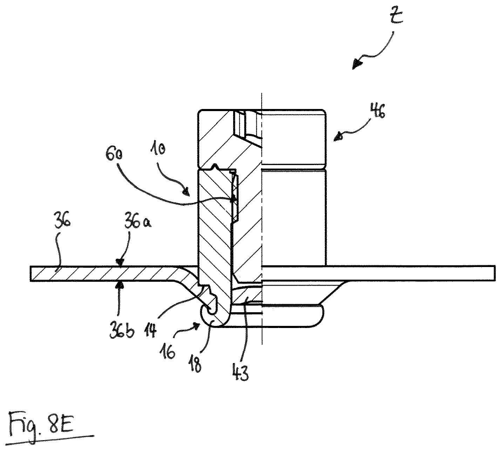

In dem Kopfteil 25 des Mutterelements ist in der Durchgangsöffnung 58 in axialer Richtung abschnittsweise ein Innengewinde 60 ausgebildet (Fig. 8E), das sich in der vorliegenden Ausführungsform von der Klemmfläche 48 ausgehend erstreckt. Das als Fixierschraube ausgebildete Fixierelement 46 weist ein mit dem Innengewinde 60 korrespondierendes Außengewinde 62 zur Fixierung an dem Mutterelement auf. Das Innengewinde 60 endet in dem Kopfteil 12, sodass der Stanzabschnitt 16 und insbesondere dessen Innenwand 18i kein Innengewinde 60 mehr aufweist (Fig. 8D). In einem sich in axialer Richtung an den Kopfteil 12 anschließenden Abschnitt des Stanzabschnitts sind sich in axialer Richtung erstreckende Rippen 26 auf der Innenwand 18i angeordnet (Fig. 8D), welche als Butzensicherungserhebung für einen Butzen 43 (Fig. 8E) dienen. Wie vorstehend bereits beschrieben, können die axiale Länge sowie weitere Eigenschaften der axialen Rippen 26 in Abhängigkeit von der Dicke des Werkstücks 36 und somit des Butzens 43 sowie zur Optimierung des Setzvorgangs nahezu beliebig angepasst werden.

Die Befestigung des Mutterelements an dem Werkstück 36 erfolgt grundsätzlich wie bereits im Zusammenhang mit Fig. 1 bis 7 beschrieben unter Verwendung einer Setzeinrichtung. Dabei kann vorgesehen sein, dass mittels der Setzeinrichtung lediglich das Mutterelement in das Werkstück 36 eingebracht wird. Um gegebenenfalls vorhandene spikeartige Erhebungen 50 während des Setzvorgangs nicht zu beschädigen, kann der Setzkopf eine entsprechende Aussparung, beispielsweise eine kreisförmige Vertiefung, aufweisen. Alternativ kann vorgesehen sein, dass das Mutterelement zusammen mit dem daran befestigten Fixierelement 46 in das Werkstück 36 eingebracht wird, wobei als Setzfläche 64 ein dem Stanzabschnitt 16 abgewandter, sich in radialer Richtung erstreckender Endabschnitt des Fixierelements 46 dienen kann. In diesem Fall kann das Fixierelement 46 in einer der Klemmfläche 48 zugewandten Kontaktfläche 66 eine Aussparung 68 zur Aufnahme und zum Schutz der spikeförmigen Erhebungen 50 vor Zerstörung aufweisen.

Um, insbesondere in letzterem Fall, sicherzustellen, dass der beim Einstanzen des Mutterelements in das Werkstück 36 aus diesem herausgetrennte Butzen 43 in dem Stanzabschnitt 16 effektiv durch die axialen Rippen 26 eingeklemmt wird, kann vorgesehen sein, dass das Fixierelement 46 sich in an dem Mutterelement befestigten Zustand lediglich durch den Kopfteil 12, nicht aber in oder gar durch den Stanzabschnitt 16 erstreckt (Fig. 8E). So kann eine Kollision zwischen dem Fixierelement 46 und dem Butzen 43 vermieden werden.

In Fällen, in denen der Butzen 43 in dem fertigen Zusammenbauteil Z die Funktion des Mutterelements nicht beeinträchtigt, kann der Butzen 43, wie in Fig. 8E gezeigt, in dem Zusammenbauteil Z verbleiben. Sollte der Butzen 43 stören, beispielsweise weil mittels des Mutterelements eine Durchgangöffnung in dem Werkstück 36 erzeugt werden soll, so kann der Butzen 43 nach dem Setzvorgang aus dem Zusammenbauteil Z entfernt werden. In diesem Fall kann vorgesehen sein, dass die axialen Rippen 26 während des Setzvorgangs nicht umgeformt werden und dass kein Hinterschnitt H (vgl. Fig. 7A) gebildet wird, sondern dass der Butzen 43 lediglich reibschlüssig durch die axialen Rippen 26 in dem Stanzabschnitt 16 gehalten wird. So wird das nachträgliche Entfernen des Butzens 43 aus dem Zusammenbauteil Z erleichtert.

### Bezugszeichenliste

- 10: Funktionselement
- 12: Kopfteil
- 14: Anlagefläche
- 16: Stanzabschnitt
- 18: Wandung
- 18a: Außenwand
- 18i: Innenwand
- 20: Hohlraum
- 22: Stanzkante
- 24: Öffnung
- 26: axiale Rippe
- 28: Bodenabschnitt
- 28k: konischer Abschnitt
- 28z: zylindrische Vertiefung
- 30: erhebungsfreier Bereich
- 32: Übergangsabschnitt
- 34: Setzkopf
- 36: Werkstück
- 36a, 36b: Werkstücklage
- 38: Matrize
- 38a: Auflagefläche
- 39: Einlaufradius
- 40: Trennkante
- 42: Matrizenstempel
- 43: Butzen
- 44: gekrümmter Matrizenabschnitt
- 46: Fixierelement
- 48: Klemmfläche
- 50: spikeförmige Erhebungen der Klemmfläche
- 52: Erhebungen der Anlagefläche
- 54: Vertiefungen der Anlagefläche
- 56: Verdrehsicherungsrippen des Stanzabschnitts
- 58: Durchgangsöffnung
- 60: Innengewinde des Mutterelements
- 62: Außengewinde des Fixierelements
- 64: Setzfläche
- 66: Kontaktfläche des Fixierelements
- 68: Aussparung

- A: Längsachse
- S1, S2, S1a, S2a: Schnittebene
- H: Hinterschnitt
- Z: Zusammenbauteil

## Patentansprüche

1. Selbststanzendes Funktionselement, das zum Einstanzen in ein Werkstück (36), insbesondere in ein Blechteil, ausgelegt ist, umfassend
- ein einen Flansch bildendes Kopfteil (12) mit einer Anlagefläche (14) zur Anlage an dem Werkstück und
- einen sich von dem Kopfteil, insbesondere von der Anlagefläche, weg erstreckenden Stanzabschnitt (16), der insbesondere koaxial zu einer mittleren Längsachse (A) des Funktionselements angeordnet ist,
wobei der Stanzabschnitt an seinem freien Ende eine umlaufende Stanzkante (22) zum Durchstanzen des Werkstücks aufweist und einen Hohlraum (20) in Umfangsrichtung umgibt, der eine durch die Stanzkante definierte Öffnung (24) aufweist,
wobei eine dem Hohlraum zugewandte Innenwand (18i) des Stanzabschnitts zumindest eine nach radial innen in den Hohlraum ragende Butzensicherungserhebung (26) aufweist, wobei die Erhebung die Form einer in axialer Richtung verlaufenden Rippe aufweist,
**dadurch gekennzeichnet,**
**dass** die Butzensicherungserhebung in einem axialen Endbereich des Hohlraums angeordnet ist, der der Öffnung des Hohlraums abgewandt ist, wobei der Endbereich weniger als 50%, bevorzugt weniger als 40% einer axialen Erstreckung des Hohlraums umfasst.

2. Selbststanzendes Funktionselement nach Anspruch 1,
wobei der Stanzabschnitt als ein zur Herstellung eines Formschlusses mit dem Werkstück umformbarer Nietabschnitt ausgestaltet ist, und/oder wobei die Anlagefläche in einer axialen Stirnansicht den Stanzabschnitt in Umfangsrichtung umgibt, insbesondere wobei die Anlagefläche ringförmig ausgestaltet ist.

3. Selbststanzendes Funktionselement nach Anspruch 1 oder 2,
wobei die Anlagefläche und ein Außenwandabschnitt (18a) des Stanzabschnitts, der parallel zu der Längsachse angeordnet ist, über einen Übergangsabschnitt (32) miteinander in Verbindung stehen, wobei der Übergangsabschnitt zumindest abschnittsweise gekrümmt und/oder schräg zu der Längsachse ausgebildet und angeordnet ist.

4. Selbststanzendes Funktionselement nach einem der vorstehenden Ansprüche,
wobei die Anlagefläche, der Übergangsabschnitt und/oder der Außenwandabschnitt mit zumindest einem Verdrehsicherungsmerkmal versehen ist, insbesondere wobei das Verdrehsicherungsmerkmal eine Erhebung oder eine Vertiefung umfasst.

5. Selbststanzendes Funktionselement nach einem der vorstehenden Ansprüche,
wobei das Funktionselement ein Bolzenelement ist, das einen sich auf der dem Stanzabschnitt abgewandten Seite von dem Kopfteil erstreckenden Bolzenabschnitt aufweist, insbesondere wobei der Bolzenabschnitt zumindest abschnittweise mit einem Außengewinde versehen ist.

6. Zusammenbauteil umfassend ein Funktionselement nach einem der vorstehenden Ansprüche und ein Werkstück, insbesondere zumindest ein Blechteil, wobei ein durch den Stanzabschnitt ausgestanzter Butzen (43) in dem Hohlraum angeordnet ist, der von der Butzensicherungserhebung reibschlüssig und/oder formschlüssig in dem Hohlraum gehalten ist.

7. Zusammenbauteil nach Anspruch 6,
wobei der Butzen von einem umgeformten Abschnitt (H) der Butzensicherungserhebung formschlüssig in dem Hohlraum gehalten ist, insbesondere wobei der umgeformte Abschnitt den Butzen an einer dem Kopfteil abgewandten Seite hintergreift.

8. Zusammenbauteil nach Anspruch 6 oder 7,
wobei der Butzen in einem der Butzensicherungserhebung benachbarten Bereich umgeformt ist, insbesondere in radialer Richtung, und/oder wobei der Butzen und der umgeformte Abschnitt der Butzensicherungserhebung an einer dem Kopfteil abgewandten Seite bündig miteinander abschließen.

9. Zusammenbauteil nach zumindest einem der Ansprüche 6 bis 8,
wobei der Stanzabschnitt als Nietabschnitt ausgebildet ist und ein Abschnitt des Nietabschnitts derart umgeformt ist, dass er das Werkstück an einer dem Kopfteil abgewandten Seite hintergreift.

10. Zusammenbauteil nach zumindest einem der Ansprüche 6 bis 9,
wobei das Werkstück zumindest zwei Komponenten (36a, 36b), insbesondere zumindest zwei Lagen, umfasst, die von dem Stanzabschnitt durchstanzt sind.

11. Verfahren zur Befestigung eines selbststanzenden Funktionselements gemäß zumindest einem der Ansprüche 1 bis 5 an einem Werkstück mit den Schritten:
- Bereitstellung des Werkstücks und des Funktionselements,
- Durchstanzen des Werkstücks mittels des Stanzabschnitts des Funktionselements und Heraustrennen eines Stanzbutzens derart, dass sich dieser in dem Hohlraum des Funktionselements befindet,
wobei der Butzen derart in Eingriff mit der Butzensicherungserhebung gebracht wird, dass der Butzen von der Butzensicherungserhebung reibschlüssig und/oder formschlüssig in dem Hohlraum gehalten ist, insbesondere wobei der Butzen nach dem Durchstanzen des Werkstücks in Eingriff mit der Butzensicherungserhebung gebracht wird.

12. Verfahren nach Anspruch 11,
wobei die Butzensicherungserhebung zumindest abschnittsweise derart umgeformt wird, dass der Butzen durch einen umgeformten Abschnitt der Butzensicherungserhebung formschlüssig in dem Hohlraum gehalten ist, insbesondere wobei der umgeformte Abschnitt den Butzen an einer dem Kopfteil abgewandten Seite hintergreift.

13. Verfahren gemäß Anspruch 12,
wobei sich das Werkstück bei der Befestigung des Funktionselements auf einer Matrize (38) abstützt, die einen Matrizenstempel (42) aufweist, der in den Hohlraum des Funktionselements eingeführt wird und durch den die Butzensicherungserhebung nach dem Durchstanzen zumindest abschnittsweise umformt wird, insbesondere wobei das abschnittsweise Umformen ein zumindest teilweises Abschaben der Butzensicherungserhebung umfasst.

14. Verfahren nach zumindest einem der Ansprüche 11 bis 13,
wobei der Stanzabschnitt des Funktionselements als Nietabschnitt ausgebildet ist, der durch die Matrize, derart umgeformt wird, dass er das Werkstück an einer dem Kopfteil abgewandten Seite hintergreift.

## Claims

1. A self-punching functional element which is adapted for punching into a workpiece (36), in particular into a sheet metal part, said self-punching functional element comprising
- a head part (12) forming a flange and having a contact surface (14) for contact with the workpiece; and
- a punching section (16) which extends away from the head part, in particular from the contact surface, and which is in particular arranged coaxially to a central longitudinal axis (A) of the functional element,
wherein the punching section has a peripheral punching edge (22) at its free end for punching through the workpiece and surrounds a cavity (20) in a peripheral direction, said cavity (20) having an opening (24) defined by the punching edge,
wherein an inner wall (18i) of the punching section facing the cavity has at least one elevated slug securing portion (26) projecting radially inwardly into the cavity, wherein the elevated portion has the form of a rib extending in an axial direction,
**characterized in that**
the elevated slug securing portion is arranged in an axial end region of the cavity that is remote from the opening of the cavity, with the end region comprising less than 50%, preferably less than 40%, of an axial extent of the cavity.

2. A self-punching functional element according to claim 1,
wherein the punching section is designed as a rivet section which can be reshaped to establish a form fit with the workpiece, and/or wherein the contact surface surrounds the punching section in the peripheral direction in an axial end view, in particular wherein the contact surface is of annular design.

3. A self-punching functional element according to claim 1 or 2,
wherein the contact surface and an outer wall section (18a) of the punching section, which is arranged in parallel with the longitudinal axis, are in connection with one another via a transition section (32), wherein the transition section is formed and arranged at least sectionally curved and/or obliquely with respect to the longitudinal axis.

4. A self-punching functional element according to any one of the preceding claims,
wherein the contact surface, the transition section and/or the outer wall section is/are provided with at least one feature providing security against rotation, in particular wherein the feature providing security against rotation comprises an elevated portion or a recess.

5. A self-punching functional element according to any one of the preceding claims,
wherein the functional element is a bolt element which has a bolt section extending from the head part at the side remote from the punching section, in particular wherein the bolt section is at least sectionally provided with an external thread.

6. A component assembly comprising a functional element according to any one of the preceding claims; and a workpiece, in particular at least one sheet metal part, wherein a slug (43) punched out by the punching section is arranged in the cavity and is held in a friction-locked and/or form-fitted manner in the cavity by the elevated slug securing portion.

7. A component assembly according to claim 6,
wherein the slug is held in a form-fitted manner in the cavity by a reshaped section (H) of the elevated slug securing portion, in particular wherein the reshaped section engages behind the slug at a side remote from the head part.

8. A component assembly according to claim 6 or 7,
wherein the slug is reshaped in a region adjacent to the elevated slug securing portion, in particular in a radial direction, and/or wherein the slug and the reshaped section of the elevated slug securing portion end flush with one another at a side remote from the head part.

9. A component assembly according to at least one of the claims 6 to 8,
wherein the punching section is formed as a rivet section and a portion of the rivet section is reshaped such that it engages behind the workpiece at a side remote from the head part.

10. A component assembly according to at least one of the claims 6 to 9,
wherein the workpiece comprises at least two components (36a, 36b), in particular at least two layers, which are punched through by the punching section.

11. A method of fastening a self-punching functional element according to at least one of the claims 1 to 5 to a workpiece, said method comprising the steps:
- providing the workpiece and the functional element; and
- punching through the workpiece by means of the punching section of the functional element and separating a punching slug such that it is located in the cavity of the functional element,
wherein the slug is brought into engagement with the elevated slug securing portion such that the slug is held in a friction-locked and/or form-fitted manner in the cavity by the elevated slug securing portion, in particular wherein the slug is brought into engagement with the elevated slug securing portion after the punching through of the workpiece.

12. A method according to claim 11,
wherein the elevated slug securing portion is at least sectionally reshaped such that the slug is held in a form-fitted manner in the cavity by a reshaped section of the elevated slug securing portion, in particular wherein the reshaped section engages behind the slug at a side remote from the head part.

13. A method according to claim 12,
wherein, on the fastening of the functional element, the workpiece is supported on a die (38) that has a die punch (42) which is introduced into the cavity of the functional element and by which the elevated slug securing portion is at least sectionally reshaped after the punching through, in particular wherein the sectional reshaping comprises at least partly scraping off the elevated slug securing portion.

14. A method according to at least one of the claims 11 to 13,
wherein the punching section of the functional element is formed as a rivet section which is reshaped by the die such that it engages behind the workpiece at a side remote from the head part.

## Revendications

1. Elément fonctionnel auto-poinçonneur, conçu pour être enfoncé dans une pièce à oeuvrer (36), en particulier dans une pièce en tôle, comprenant
- une partie de tête (12) formant une bride et présentant une surface d'appui (14) pour s'appuyer contre la pièce à oeuvrer, et
- une portion de poinçonnage (16) s'étendant en éloignement de la partie de tête, en particulier de la surface d'appui, et disposée en particulier coaxialement à un axe longitudinal central (A) de l'élément fonctionnel, dans lequel
à son extrémité libre, la portion de poinçonnage présente une arête de poinçonnage périphérique (22), destinée à perforer la pièce à oeuvrer, et entoure un espace creux (20) en direction périphérique, qui présente une ouverture (24) définie par l'arête de poinçonnage,
une paroi intérieure (18i) de la portion de poinçonnage, tournée vers l'espace creux, présente au moins un bossage de blocage de débouchure (26) faisant saillie radialement vers l'intérieur dans l'espace creux, le bossage présentant la forme d'une nervure s'étendant dans la direction axiale, **caractérisé en ce que**
le bossage de blocage de débouchure est disposé dans une zone d'extrémité axiale de l'espace creux, qui est détournée de l'ouverture de l'espace creux, la zone d'extrémité s'élevant à moins de 50 %, de préférence à moins de 40 %, d'une extension axiale de l'espace creux.

2. Elément fonctionnel auto-poinçonneur selon la revendication 1,
dans lequel la portion de poinçonnage est conçue comme une portion de rivet susceptible d'être déformée pour établir une liaison par complémentarité de forme avec la pièce à oeuvrer, et/ou la surface d'appui entoure la portion de poinçonnage dans la direction périphérique, en vue frontale axiale, en particulier la surface d'appui étant conçue en forme d'anneau.

3. Elément fonctionnel auto-poinçonneur selon la revendication 1 ou 2,
dans lequel la surface d'appui et une portion de paroi extérieure (18a) de la portion de poinçonnage, qui est disposée parallèlement à l'axe longitudinal, sont en liaison l'une avec l'autre par l'intermédiaire d'une portion de transition (32), la portion de transition étant réalisée et disposée au moins localement de manière incurvée et/ou oblique par rapport à l'axe longitudinal.

4. Elément fonctionnel auto-poinçonneur selon l'une des revendications précédentes,
dans lequel la surface d'appui, la portion de transition et/ou la portion de paroi extérieure est pourvue d'au moins une caractéristique anti-rotation, en particulier la caractéristique anti-rotation présentant un bossage ou un renfoncement.

5. Elément fonctionnel auto-poinçonneur selon l'une des revendications précédentes,
dans lequel l'élément fonctionnel est un élément formant boulon qui présente une portion de boulon s'étendant depuis la partie de tête sur le côté détourné de la portion de poinçonnage, en particulier la portion formant boulon étant pourvue au moins localement d'un filetage.

6. Pièce d'assemblage comprenant un élément fonctionnel selon l'une des revendications précédentes et une pièce à oeuvrer, en particulier une pièce en tôle,
dans laquelle une débouchure (43) découpée par la portion de poinçonnage est disposé dans l'espace creux, qui est retenue par friction et/ou par complémentarité de forme dans l'espace creux par le bossage de blocage de débouchure.

7. Pièce d'assemblage selon la revendication 6,
dans laquelle la débouchure est maintenue par complémentarité de forme dans l'espace creux par une portion déformée (H) du bossage de blocage de débouchure, en particulier la portion déformée engageant par l'arrière la débouchure sur un côté détourné de la partie de tête.

8. Pièce d'assemblage selon la revendication 6 ou 7,
dans laquelle la débouchure est déformée dans une zone adjacente au bossage de blocage de débouchure, en particulier dans la direction radiale, et/ou
la débouchure et la portion déformée du bossage de blocage de débouchure se terminent en affleurement l'un avec l'autre sur un côté détourné de la partie de tête.

9. Pièce d'assemblage selon l'une au moins des revendications 6 à 8,
dans laquelle la portion de poinçonnage est réalisée une portion de rivet, et une partie de la portion de rivet est déformée de manière à engager par l'arrière la pièce à oeuvrer sur un côté détourné de la partie de tête.

10. Pièce d'assemblage selon l'une au moins des revendications 6 à 9,
dans laquelle la pièce à oeuvrer comprend au moins deux composants (36a, 36b), en particulier au moins deux couches, qui sont perforées par la portion de poinçonnage.

11. Procédé de fixation d'un élément fonctionnel auto-poinçonneur selon l'une au moins des revendications 1 à 5 sur une pièce à oeuvrer, comprenant les étapes consistant à :
- fournir la pièce à oeuvrer et l'élément fonctionnel,
- perforer la pièce à oeuvrer au moyen de la portion de poinçonnage de l'élément fonctionnel, et découper une débouchure de poinçonnage de telle sorte que celle-ci se trouve dans l'espace creux de l'élément fonctionnel, dans lequel
la débouchure est amenée en engagement avec le bossage de blocage de débouchure de telle sorte que la débouchure est retenue par friction et/ou par complémentarité de forme dans l'espace creux par le bossage de blocage de débouchure, en particulier la débouchure étant amenée en engagement avec le bossage de blocage de débouchure après le perforage de la pièce à oeuvrer.

12. Procédé selon la revendication 11,
dans lequel le bossage de blocage de débouchure est déformé au moins localement de telle sorte que la débouchure est retenue par complémentarité de forme dans l'espace creux par une portion déformée du bossage de blocage de débouchure, en particulier la portion déformée engageant par l'arrière la débouchure sur un côté détourné de la pièce de tête.

13. Procédé selon la revendication 12,
dans lequel, lors de la fixation de l'élément fonctionnel, la pièce à oeuvrer s'appuie sur une matrice (38) comprenant un poinçon de matrice (42) qui est inséré dans l'espace creux de l'élément fonctionnel et par lequel le bossage de blocage de débouchure est déformé au moins localement après le perforage, en particulier la déformation locale incluant un enlèvement par grattage au moins partiel du bossage de blocage de débouchure.

14. Procédé selon l'une au moins des revendications 11 à 13,
dans lequel la portion de poinçonnage de l'élément fonctionnel est réalisée comme une portion de rivet qui est déformée par la matrice de manière à engager par l'arrière la pièce à oeuvrer sur un côté détourné de la partie de tête.
